# EUROPÄISCHE PATENTANMELDUNG

(11) **EP 3 266 714 A1**
(43) Veröffentlichungstag der Anmeldung: **10.01.2018**
(21) Anmeldenummer: 17179261.7
(22) Anmeldetag: 03.07.2017
(51) Int. Cl.: B64D 33/02, F02C 7/04

(54) **TRIEBWERKSGONDEL**

(30) Priorität: 08.07.2016 DE 102016112604
(71) Anmelder: Rolls-Royce Deutschland Ltd & Co KG, 15827 Blankenfelde-Mahlow (DE)
(72) Erfinder: ORTMANNS, Jens, 14548 Schwielowsee / OT Caputh (DE)
(74) Vertreter: Müller, Wolfram Hubertus

(57) **Zusammenfassung**

Die Erfindung betrifft eine Triebwerksgondel (1), die umfasst: eine Gondelwand (12), die eine Innenseite (11) und eine Außenseite (13) aufweist; eine Einlauflippe (14), die am stromaufwärts ausgebildeten Ende der Triebwerksgondel (1) ausgebildet ist; und einen Triebwerkseinlauf, der die für das zugehörige Triebwerk benötigte Luft aufnimmt und der durch die Innenseite (11) der Gondelwand (12) gebildet ist. Es ist vorgesehen, dass die Gondelwand (12) eine luftdurchlässige Struktur (16) aufweist, die sich von der Außenseite (13) zur Innenseite (11) der Gondelwand (12) erstreckt und die dazu ausgebildet ist, Luft von der Außenseite (13) zur Innenseite (11) durchzulassen, die gegen die Außenseite (13) strömt.

## Beschreibung

Die Erfindung betrifft eine Triebwerksgondel gemäß dem Oberbegriff des Patentanspruchs 1.

Der Gondelentwurf für ein Triebwerk ist maßgeblich durch die Eigenschaften im Flug geprägt. Dies bedeutet, dass die Geometriedefinition einer Gondel dem Strömungszustand und den Anforderungen des Fans optimal angepasst ist, damit im Flugzustand ein minimaler Verlust erzeugt und der spezifische Brennstoffverbrauch so gering wie möglich gehalten wird.

Es gibt jedoch auch Betriebszustände einer Triebwerksgondel, auf die die Gondel und damit auch der Fan nicht ideal ausgelegt sind. Zu diesen Zuständen gehört der Fall der Seitenwindströmung beim Start. Bei einer Seitenwindströmung beim Start wird das stehende oder rollende Flugzeug von einer Seitenwindströmung angeströmt, die beispielsweise senkrecht oder schräg zur Startrichtung verläuft. Eine solche Seitenwindströmung kann eine Strömungsablösung an der Gondellippe erzeugen, die das Betriebsverhalten des Fans negativ beeinflussen kann. So können Strömungsablösungen an den Einlauflippen generiert werden, wenn die Einlaufzuströmung nicht exakt axial ist, wie es bei starkem Seitenwind der Fall sein kann. Hierdurch werden Störungen in der Zuströmung zum Triebwerksfan erzeugt.

Die EP 2 607 657 A2 beschreibt eine Triebwerksgondel, die einer Strömungsablösung an der Gondellippe bei Seitenwind dadurch entgegenwirkt, dass aus dem Kerntriebwerk entnommenes Druckgas dem Triebwerkseinlauf zugeführt wird. Das Druckgas wird dabei durch ein System von Leitungen einer Kammer innerhalb der Gondel zugeführt, die im Bereich der Gondellippe ausgebildet ist. Von dieser Kammer wird das Druckgas über definierte Öffnungen dem Triebwerkseinlauf zugeführt.

Die US 8 967 964 B2 beschreibt eine Anordnung einer Mehrzahl von Luftaustrittsöffnungen an einer Triebwerksfläche. In einem Ausführungsbeispiel sind Luftaustrittsöffnungen im Bereich der Lippe eines Triebwerkseinlauf oder entlang des Umfangs der Verkleidung des Triebwerkseinlaufs ausgebildet, um eine Strömungsablösung bei Seitenwind zu verhindern.

Der vorliegenden Erfindung liegt die Aufgabe zu Grunde, eine Triebwerksgondel zur Beeinflussung von Strömungen in einer Triebwerksgondel bereitzustellen, die eine Strömungsablösung hinter der Einlauflippe bei Seitenwindströmung verhindert oder reduziert.

Diese Aufgabe wird erfindungsgemäß durch eine Triebwerksgondel mit den Merkmalen des Anspruchs 1. Ausgestaltungen der Erfindung sind in den Unteransprüchen angegeben.

Danach sieht die vorliegende Erfindung vor, in der Gondelwand eine luftdurchlässige Struktur vorzusehen, die sich von der Außenseite zur Innenseite der Gondelwand erstreckt und die dazu ausgebildet ist, Luft von der Außenseite zur Innenseite durchzulassen, die gegen die Außenseite strömt. Die luftdurchlässige Struktur ist insbesondere dazu vorgesehen und ausgebildet, dass Luft einer Seitenwindströmung von der Außenseite direkt durch die Gondelwand in die Gondel einströmen kann.

Durch eine luftdurchlässige Struktur in der Gondelwand wird erreicht, dass Luft von außen in die Gondel einströmen kann. Die von außen in die Gondel einströmende Luft führt dabei den Teilchen der Grenzschicht der Hauptströmung Energie zu und beschleunigt diese, so dass das Grenzschichtmaterial nicht zum Stillstand kommt und eine Ablösung der Grenzschicht somit nicht oder nur verzögert eintritt. Eine Strömungsablösung hinter der Gondellippe wird dadurch verzögert oder sogar verhindert. Dabei ist die luftdurchlässige Struktur so gestaltet, dass eine Luftmenge durchgelassen wird, die wesentlich kleiner ist als der Hauptmassenstrom der durch den Fan des Flugtriebwerks angesogenen Luft.

Die Erfindung verhindert eine Strömungsablösung hinter der Gondellippe insbesondere beim Start. Sie kann jedoch Vorteile im Falle einer starken Seitenwindströmung ebenfalls beim Langsamflug und beim Reiseflug bereitstellen.

Gemäß einer Ausgestaltung der Erfindung ist vorgesehen, dass die luftdurchlässige Struktur eine Vielzahl von Röhren umfasst, die sich jeweils bis zur Innenseite erstrecken. Die Röhren erstrecken sich dabei gemäß einer Ausgestaltung von der Außenseite bis zur Innenseite, wobei dies jedoch nicht notwendigerweise der Fall ist. So kann alternativ beispielsweise vorgesehen sein, dass die Röhren sich ausgehend von einem Sammelvolumen bis zur Innenseite erstrecken, das angrenzend an die Außenseite ausgebildet ist und von der Außenseite einströmende Luft aufnimmt. Auch kann alternativ vorgesehen sein, dass die Röhren sich ausgehend von einer weiteren Struktur erstrecken, die an der Außenseite der Triebwerksgondel ausgebildet ist und eine bevorzugte Durchlassrichtung definiert, wie noch erläutert werden wird.

Die Röhren können grundsätzlich eine beliebige Anordnung aufweisen. Beispielsweise bilden sie ein eindimensionales oder ein zweidimensionales Array in der Gondelwand.

Eine weitere Ausgestaltung der Erfindung sieht vor, dass die genannten Röhren jeweils als Düse ausgebildet sind. Hierzu realisieren sie eine Querschnittsreduzierung in Richtung zur Innenseite. Durch die Ausbildung als Düsen erfährt die in den Röhren strömende Luft eine Geschwindigkeitserhöhung, die dazu führt, dass Grenzschichtmaterial der Hauptströmung eine stärkere Beschleunigung erfährt, so dass eine Strömungsablösung noch effektiver verhindert wird.

Die luftdurchlässige Struktur kann statt durch Röhren auch in anderer Weise ausgebildet sein. Grundsätzlich kann die luftdurchlässige Struktur durch beliebige Strukturen, Luftleitungen und Perforationen bereitgestellt werden, die es ermöglichen, dass Luft von der Außenseite zur Innenseite geleitet wird und in die Gondel einströmen kann. So sieht ein alternatives Ausführungsbeispiel vor, dass die luftdurchlässige Struktur durch ein poröses Material gebildet ist oder ein poröses Material aufweist. Keine luftdurchlässige Struktur im Sinne der vorliegenden Erfindung ist dagegen eine ggf. durch eine bewegliche Klappe abdeckbare großflächige Aussparung in der Gondelwand; eine solche weist keine eigene Struktur auf.

Die luftdurchlässige Struktur ist gemäß einer Ausführungsvariante derart ausgebildet, dass sie eine definierte Einblasrichtung aufweist, in der Luft in die Struktur eintreten kann. Dies kann dadurch erreicht werden, dass die luftführenden Strukturen der luftdurchlässigen Struktur an deren Außenseite eintretende Luft in der bevorzugten Einblasrichtung in Richtung der Innenseite transportieren. Die Röhren oder anderen Strukturen, die den Durchlass bilden, sind dementsprechend angrenzend an die Außenseite in der bevorzugten Einblasrichtung orientiert.

Die definierte Einblasrichtung verläuft gemäß einer Ausgestaltung der Erfindung im Wesentlichen quer zur Längsrichtung der Triebwerksgondel, so dass die luftdurchlässige Struktur eine Luftdurchlässigkeit für eine im Wesentlichen quer zur Längsrichtung der Triebwerksgondel verlaufende Seitenwindkomponente bereitstellt. Sofern die luftdurchlässige Struktur durch Röhren realisiert ist, verlaufen diese angrenzend an die Außenseite im Wesentlichen senkrecht zu dem Bereich der Außenseite, von dem sie ausgehen. Hierdurch wird erreicht, dass die luftdurchlässige Struktur für eine im Wesentlichen quer zur Längsrichtung der Triebwerksgondel verlaufende Seitenwindkomponente durchlässig ist.

Eine weitere Ausgestaltung der Erfindung sieht vor, dass die luftdurchlässige Struktur derart ausgebildet ist, dass sie eine definierte Ausblasrichtung aufweist, in der die Luft von der Innenseite durch entsprechende Öffnungen in der Innenseite in das Gondelinnere strömt.

Dabei ist gemäß einer Ausgestaltung der Erfindung vorgesehen, dass die definierte Ausblasrichtung eine Richtungskomponente in Längsrichtung der Triebwerksgondel aufweist, so dass durch die luftdurchlässige Struktur strömende Luft mit einer Geschwindigkeitskomponente in Richtung der Hauptströmung in das Gondelinnere strömt. Die Luft wird somit bereits im Durchlass in Richtung der Hauptströmung, d.h. zum Fan hin umgelenkt, so dass sie eine Geschwindigkeitskomponente in Längsrichtung der Triebwerksgondel aufweist, wenn sie die luftdurchlässige Struktur verlässt. Dies ermöglicht es, Grenzschichtmaterial der Hauptströmung mittels der Luft, die durch die luftdurchlässige Struktur in das Gondelinnere einströmt, stärker zu beschleunigen und damit eine Strömungsablösung effektiv zu verhindern.

Sofern die luftdurchlässige Struktur durch Röhren realisiert ist, kann hierzu vorgesehen sein, dass die Röhren an ihren der Innenseite zugewandten Enden in Längsrichtung der Triebwerksgondel gebogen sind. In einer Ausgestaltung enden die Röhren in näherungsweise tangentialer Ausrichtung an der Gondelinnenwand.

Eine weitere Ausgestaltung der Erfindung sieht vor, dass die luftdurchlässige Struktur an der Außenseite mindestens eine Materialschicht umfasst, die durch ein poröses Material mit definierter Durchlassrichtung gebildet ist. Die Materialschicht bildet dabei die Außenhaut der Triebwerksgondel in dem fraglichen Bereich. Durch Bereitstellung einer definierten Durchlassrichtung wird erreicht, dass nur Luft einer seitlichen Strömung einströmen und die luftdurchlässige Struktur durchqueren kann.

In einer Ausgestaltung der Erfindung schließen sich an die an der Außenseite ausgebildete Materialschicht aus poröses Material mit definierter Durchlassrichtung die bereits erwähnten Röhren an, die sich dann von dieser Materialschicht bis zur Innenseite erstrecken.

Die luftdurchlässige Struktur ist stromabwärts der Einlauflippe ausgebildet, wobei sie unmittelbar hinter der Einlauflippe ansetzen oder alternativ in axialem Abstand zu der Einlauflippe realisiert sein kann. Die luftdurchlässige Struktur erstreckt sich dabei über eine definierte axiale Länge, die beispielsweise zwischen 5 % und 50 % der axialen Länge des Triebwerkseinlaufs zwischen Einlauflippe und Fanebene liegt. Ihr axialer Abstand zur Gondellippe beträgt beispielsweise das 1-10fache, insbesondere das 2-5fache, insbesondere das 2-3fache des Gondellippen-Durchmessers, wobei der Gondellippen-Durchmesser durch den zweifachen Radius der stromaufwärts ausgebildeten Rundung der Gondellippe zur Strömung hin definiert ist.

Was die Erstreckung der luftdurchlässigen Struktur in Umfangsrichtung angeht, so kann vorgesehen sein, dass die luftdurchlässige Struktur nicht entlang des gesamten Umfanges der Gondel in der Gondelwand ausgebildet ist, sondern nur in einem bestimmten Umfangsbereich oder in bestimmten Umfangsbereichen. Insbesondere kann vorgesehen sein, dass die luftdurchlässige Struktur nur in Bereichen der Triebwerksgondel ausgebildet ist, die sich - sofern man die Triebwerksgondel betrachtet, wenn diese an einer Tragfläche montiert ist - seitlich an der Triebwerksgondel befinden. Es handelt sich somit um eine bei Seitenwind windzugewandte Seite der Triebwerksgondel. Grundsätzlich kann sich die luftdurchlässige Struktur jedoch auch in anderen Umfangsbereichen oder vollständig in Umfangsrichtung erstrecken.

Ein Verfahren zur Beeinflussung von Strömungen in einer Triebwerksgondel sieht vor, dass bei Seitenwind Luft von der Außenseite durch eine in der Gondelwand ausgebildete luftdurchlässige Struktur zur Innenseite geleitet und dabei der an der Innenseite anliegenden Grenzschicht der Hauptströmung Energie zugeführt wird. Insbesondere beschleunigt die durch die luftdurchlässige Struktur strömende Luft die Grenzschicht der Hauptströmung, so dass eine bei Seitenwind hinter der Gondellippe auftretende Strömungsablösung reduziert oder verhindert wird.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2: schematisch eine Ansicht von vorne in eine Triebwerksgondel gemäß dem Stand der Technik unter Darstellung einer Strömungsablösung bei Seitenwindströmung;
- Figur 3: eine schematische, teilweise geschnittene Ansicht von vorne eines ersten Ausführungsbeispiels der Erfindung, wobei in der Gondelwand ein seitlicher Durchlass ausgebildet ist;
- Figur 4: eine vergrößerte Darstellung des geschnittenen Bereichs A-A der Figur 3, wobei der geschnittene Bereich in der Ansicht von vorne dargestellt ist;
- Figur 5: eine Schnittdarstellung entlang der Linie B-B der Figur 4, wobei der geschnittene Bereich in der Ansicht von oben dargestellt ist; und
- Figur 6: ein alternatives Ausführungsbeispiel der Erfindung in einer Schnittdarstellung entsprechend der Figur 5.

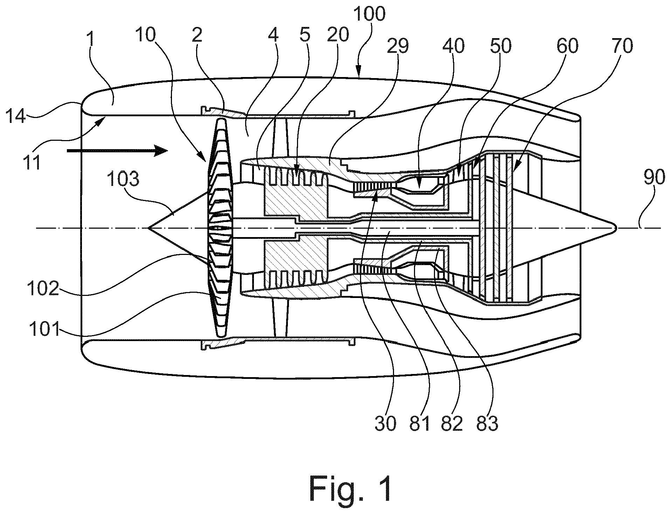

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist die Ausbildung der Triebwerksgondel 1 in dem axialen Bereich, der stromaufwärts des Fans 10 liegt, von Bedeutung.

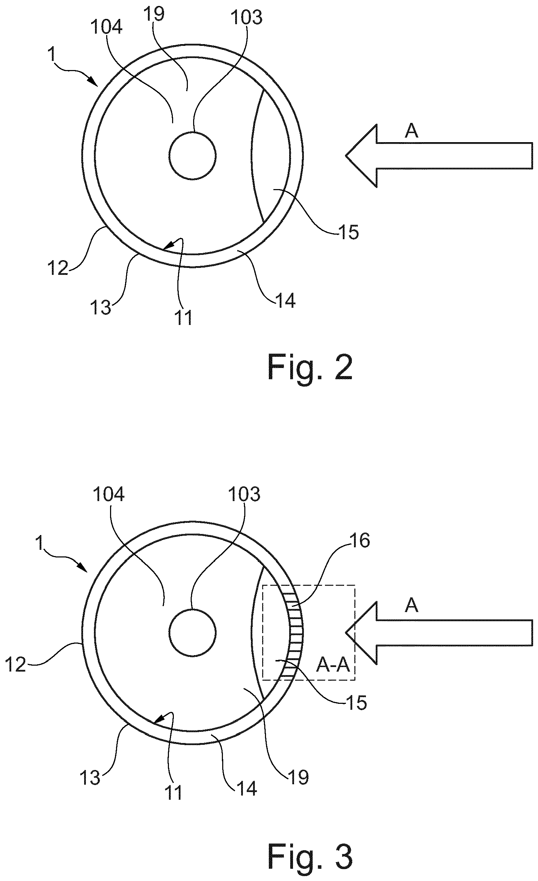

Die Figur 2 zeigt eine Triebwerksgondel 1 in einer Darstellung von vorne, d.h. mit Blick auf den Fan. Vom Fan ist in der schematischen Darstellung der Figur 2 nur der Nasenkonus 103 dargestellt. Die Ebene 104 stellt die Fan-Ebene dar. Die Gondel 1 weist eine Gondelwand 12 mit einer Innenseite 11 und einer Außenseite 13 auf. Die Innenseite 11 bildet dabei im Bereich vor dem Fan den Triebwerkseinlauf aus, der die für das Triebwerk benötigte Luft aufnimmt und dem Fan zuführt. Das Gondelinnere, d.h. der vor dem Fan durch die Gondelwand 12 begrenzte Bereich ist mit dem Bezugszeichen 19 bezeichnet.

Die Gondel 1 umfasst eine Einlauflippe 14 (auch als Gondellippe bezeichnet), die abgerundet ausgebildet ist. Die Einlauflippe 14 bildet das vordere Ende der Triebwerksgondel 1. Sie geht an der Innenseite 11 in den Triebwerkseinlauf über. In axialer Richtung endet sie dabei am engsten Innenquerschnitt (auch als "throat" bezeichnet) der Triebwerksgondel 1. Der hinter dem engsten Innenquerschnitt beginnende Triebwerkseinlauf 11 ist bei einem subsonischen Triebwerkseinlauf, wie er hier betrachtet wird, als Diffusor ausgebildet.

In der Figur 2 ist des Weiteren eine Seitenwindkomponente A einer Seitenwindströmung dargestellt. Die Seitenwindkomponente A führt dazu, dass die Zuströmung von Luft zum Fan im Triebwerkseinlauf 11 nicht exakt axial erfolgt, wobei die Einlauflippen 14 in dem der Seitenwindkomponente A zugewandten Bereich von der Seitenwindströmung zusätzlich umströmt werden. Hierdurch können Strömungsablösungen an den Einlauflippen 14 generiert werden. Eine entsprechende Strömungsablösung 15 ist schematisch dargestellt.

Die Figur 3 zeigt eine Triebwerksgondel 1, bei der in der Gondelwand 12 eine schematisch dargestellte luftdurchlässige Struktur 16 (auch als Durchlass bezeichnet) ausgebildet ist, die sich von der Außenseite 13 zur Innenseite 11 der Gondelwand 12 erstreckt. Die luftdurchlässige Struktur 16 ermöglicht es, dass Luft einer Seitenwindströmung A von der Außenseite 13 direkt (also nicht über die Gondellippen 14) in das Gondelinnere 19 einströmen kann. Die luftdurchlässige Struktur 16 erstreckt sich über eine definierte axiale Länge und über einen definierten Winkelbereich in Umfangsrichtung.

In axialer Richtung beginnt die luftdurchlässige Struktur 16 unmittelbar hinter der Einlauflippe 14 oder alternativ in einem gewissen Abstand zur Einlauflippe 14. Beispielsweise ist die luftdurchlässige Struktur in einem axialen Abstand zur Gondellippe 14 ausgebildet, der das Zweifache bis Dreifache des Gondellippen-Durchmesser beträgt, wobei der Gondellippen-Durchmesser durch den zweifachen Radius der stromaufwärts ausgebildeten Rundung der Gondellippe 14 zur Strömung hin definiert ist.

Was die Erstreckung der luftdurchlässigen Struktur 16 in Umfangsrichtung angeht, so ist im dargestellten Ausführungsbeispiel vorgesehen, dass die luftdurchlässige Struktur 16 nur in dem Bereich der Triebwerksgondel 1 ausgebildet ist, der einer Seitenwindkomponente A zugewandt ist. Dies ist - bezogen auf die an einer Tragfläche montierte Triebwerksgondel - einer der beiden seitlichen Bereiche. Alternativ ist eine luftdurchlässige Struktur an beiden seitlichen Bereichen ausgebildet. Grundsätzlich kann sich die luftdurchlässige Struktur 16 jedoch auch um den gesamten Umfang der Gondel 1 erstrecken.

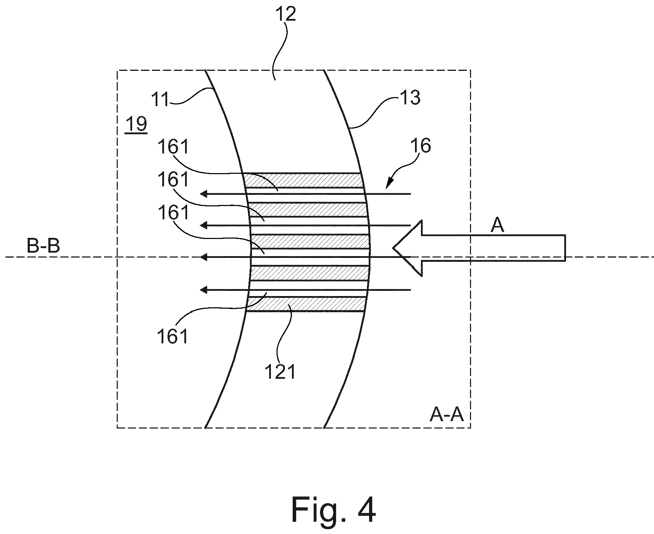

Die Figur 4 zeigt ein Ausführungsbeispiel einer luftdurchlässigen Struktur 16. Die luftdurchlässige Struktur 16 umfasst eine Vielzahl von Röhren 161, die sich im dargestellten Ausführungsbeispiel jeweils von der Außenseite 13 bis zur Innenseite 11 erstrecken. Die Röhren 161 sind dabei in einem definierten Bereich in der Gondelwand 12 ausgebildet, der sich in axialer Richtung und in Umfangsrichtung erstreckt. Sie bilden dabei beispielsweise ein 2-dimensionales Array in der Gondelwand 12. Die Röhren 161 sind in einem Material 121 ausgebildet, das einen Bestandteil der Gondelwand 12 bildet. Beispielsweise wird die luftdurchlässige Struktur 16, die das Material 121 mit den Röhren 161 umfasst, vorgefertigt und in eine entsprechende Aussparung in der Gondelwand 12 eingesetzt. Alternativ sind die Röhren 161 in Material 121 ausgebildet, das auch an anderen Stellen die Gondelwand 12 bildet.

Die Röhren 161 weisen beispielsweise einen kreisförmigen Querschnitt auf, wobei dies jedoch nicht notwendigerweise der Fall ist. Sie weisen beispielsweise einen maximalen Durchmesser im Bereich zwischen 5 mm und 10 cm auf. Die Röhren 161 enden in beispielsweise kreisförmigen Löchern in der Innenwand 11.

Die Größe und Anzahl der einzelnen Röhren 161 ist so bemessen, dass der gesamte Massenstrom, der maximal (d.h. bei starkem Seitenwind in Querrichtung) durch die luftdurchlässige Struktur 16 ins Gondelinnere 19 strömt, deutlich kleiner ist als der Hauptmassenstrom, der sich im Einlaufbereich 11 in Richtung des Fans bewegt und durch die Fan-Ebene 104 (vgl. Figuren 2 und 3) strömt. Beispielsweise beträgt der maximale Massenstrom, der durch die luftdurchlässige Struktur 16 strömt, höchstens 10 %, insbesondere höchstens 5 %, insbesondere höchstens 1 % Hauptmassenstroms.

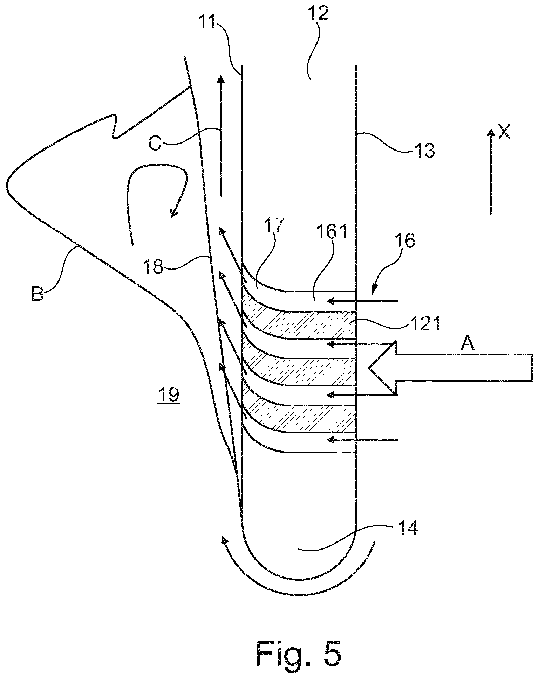

Im Folgenden wird auch auf die Figur 5 Bezug genommen, die einen Schnitt entlang der Linie B-B der Figur 4 zeigt. Die axiale Richtung bzw. Längsrichtung ist in der Figur 5 mit X bezeichnet. Es ist erkennbar, dass die einzelnen Röhren 161 zur Innenseite 11 hin in axialer Richtung gebogen sind, so dass die in ihnen strömende Luft eine Geschwindigkeitskomponente in Richtung der Hauptströmung im Triebwerkseinlauf 11 aufweist. Die aus den Röhren 161 in das Triebwerksinnere 19 einströmende Luft führt den Luftteilchen, die sich in der Grenzschicht 18 befinden, die an der Innenseite 11 anliegt, zusätzliche Energie zu und beschleunigt diese. Dies führt dazu, dass eine Ablösung der Grenzschicht 18 und damit eine Strömungsablösung hinter der Einlauflippe 14 verzögert oder sogar verhindert wird. Die Strömung C in der Grenzschicht 18 liegt trotz der Seitenwindkomponente A an der Innenwand 11 an.

Die Figur 5 zeigt schematisch ebenfalls die Situation, die ohne eine luftdurchlässige Struktur 16 vorliegen würde. Hier würde eine Strömungsablösung B aufgrund der Seitenwindkomponente A erfolgen.

Der Figur 5 ist des Weiteren zu entnehmen, dass die Röhren 161 jeweils als Düse 17 ausgebildet sind und sich hierzu in Richtung der Innenwand 11 verjüngen bzw. eine sich verringernde Querschnittsfläche aufweisen. Dies führt zu einer Beschleunigung der in den Röhren 161 transportierten Luft. Die Beschleunigung der Luft in der Grenzschicht 18 wird dadurch noch verstärkt, so dass eine Strömungsablösung noch effektiver verhindert wird.

Angrenzend zur Außenseite 13 verlaufen die Röhren 161 dagegen im Wesentlichen quer zur Längsrichtung X der Triebwerksgondel. Hierdurch wird eine Einblasrichtung in die luftdurchlässige Struktur 16 quer zur Längsrichtung X definiert. Es wird dadurch sichergestellt, dass eine quer zur Längsrichtung X ausgerichtete Seitenwindkomponente A eines Seitenwindes eingekoppelt und durch die luftdurchlässige Struktur 16 transportiert werden kann. Aufgrund der gebogenen Form der Röhren 161 zur Innenwand 11 hin wird eine Ausblasrichtung in das Gondelinnere 19 definiert, die eine axiale Geschwindigkeitskomponente aufweist, so dass Luft mit einer axialen Geschwindigkeitskomponente in die Grenzschicht 18 einströmt.

Es wird darauf hingewiesen, dass die Ausbildung und Anordnung der Röhren 161 in den Figuren 4 und 5 nur beispielhaft zu verstehen ist. Die luftdurchlässige Struktur 16 kann grundsätzlich auch mittels anderer Strukturen realisiert werden, die geeignet und dafür vorgesehen sind, Luft von der Außenseite in das Gondelinnere zu transportieren. Hierzu kann die luftdurchlässige Struktur alternativ beispielsweise durch ein offenporöses Material gebildet sein, bei dem die einzelnen Poren miteinander und mit der Umgebung in Verbindung stehen und eine luftdurchlässige Struktur mit definierter Einblasrichtung und definierter Ausblasrichtung bereitstellen.

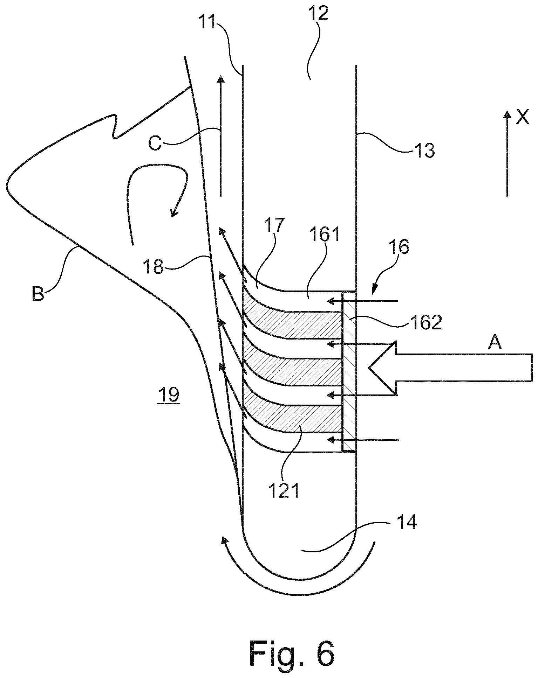

Eine weitere Ausführungsvariante sieht vor, dass eine Ausbildung der luftdurchlässigen Struktur 16 aus einem poröses Material und einer Vielzahl von Röhren kombiniert ist. Ein solches Ausführungsbeispiel zeigt die Figur 6. Diese unterscheidet sich dadurch vom Ausführungsbeispiel der Figur 5, dass die luftdurchlässige Struktur 16 als weiteres Element eine Schicht 162 aufweist, die den Durchlass 16 an der Außenseite 13 bildet und die durch ein poröses Material mit definierter Durchlassrichtung gebildet ist. Die Durchlassrichtung ist dabei senkrecht zur Längsrichtung X. Die Schicht 162 bildet in dem entsprechenden Bereich die Außenhaut der Triebwerksgondel 1.

Radial innen an die Schicht 162 schließt eine Röhrenanordnung mit Röhren 161 entsprechend den Figuren 3 bis 5 an. Durch die Verwendung einer Schicht 162 mit definierter Durchlassrichtung ist sichergestellt, dass nur bei Vorliegen einer Seitenwindkomponente A Luft durch die luftdurchlässige Struktur 16 ins Gondelinnere 19 strömen kann, wogegen Luft mit anderer Richtungskomponente nicht in die luftdurchlässige Struktur 16 hineinströmen kann.

Als poröses Material, das die Schicht 162 mit definierter Durchlassrichtung bildet, können beispielsweise luftdurchlässige Kompositmaterialen eingesetzt werden, die Perforationen aufweisen. Beispielsweise werden luftdurchlässigen Laminate verwendet, die unter Verwendung von Treibmitteln zur gezielten Expansion der Faserarchitektur hergestellt sind. Die Perforation wird beispielsweise durch Nadeln bereitgestellt, die im Kompositmaterial enthalten sind und die nach Aushärten des Kompositmaterials entfernt werden. Auch kann vorgesehen sein, dass die Perforation durch nachträgliches Entfernen von Nähfäden gebildet wird. Das poröse Material bildet dabei nur die Schicht 162 bzw. die Außenhaut aus und erstreckt sich nicht entlang der Röhren 161.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise kann alternativ vorgesehen sein, dass die Luft im Durchlass 16 zunächst in ein Sammelvolumen geleitet und dann von diesem über eine Vielzahl von Röhren in das Gondelinnere geleitet wird.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Triebwerksgondel (1), die aufweist:
- eine Gondelwand (12), die eine Innenseite (11) und eine Außenseite (13) aufweist,
- eine Einlauflippe (14), die am stromaufwärts ausgebildeten Ende der Triebwerksgondel (1) ausgebildet ist, und
- einen Triebwerkseinlauf, der die für das zugehörige Triebwerk benötigte Luft aufnimmt und der durch die Innenseite (11) der Gondelwand (12) gebildet ist,
**dadurch gekennzeichnet,**
**dass** die Gondelwand (12) eine luftdurchlässige Struktur (16) aufweist, die sich von der Außenseite (13) zur Innenseite (11) der Gondelwand (12) erstreckt und die dazu ausgebildet ist, Luft von der Außenseite (13) zur Innenseite (11) durchzulassen, die gegen die Außenseite (13) strömt.

2. Triebwerksgondel nach Anspruch 1, **dadurch gekennzeichnet, dass** die luftdurchlässige Struktur (16) eine Vielzahl von Röhren (161) umfasst, die sich jeweils bis zur Innenseite (11) erstrecken.

3. Triebwerksgondel nach Anspruch 2, **dadurch gekennzeichnet, dass** die Röhren (161) ein eindimensionales oder ein zweidimensionales Array bilden.

4. Triebwerksgondel nach Anspruch 2 oder 3, **dadurch gekennzeichnet, dass** die Röhren (161) in Richtung ihrer der Innenseite (11) zuwandten Enden jeweils als Düse (17) ausgebildet sind.

5. Triebwerksgondel nach Anspruch 1, **dadurch gekennzeichnet, dass** die luftdurchlässige Struktur (16) durch ein poröses Material gebildet ist oder ein poröses Material (162) aufweist.

6. Triebwerksgondel nach einem der vorangehenden Ansprüche, **dadurch gekennzeichnet, dass** die luftdurchlässige Struktur (16) derart ausgebildet ist, dass sie eine definierte Einblasrichtung aufweist, in der Luft in die luftdurchlässige Struktur (16) eintreten kann.

7. Triebwerksgondel nach Anspruch 6, **dadurch gekennzeichnet, dass** die bevorzugte Einblasrichtung im Wesentlichen quer zur Längsrichtung (X) der Triebwerksgondel (1) verläuft.

8. Triebwerksgondel nach Anspruch 7, soweit rückbezogen auf Anspruch 2, **dadurch gekennzeichnet, dass** die Röhren (161) angrenzend an die Außenseite (13) im Wesentlichen quer zur Längsrichtung (X) der Triebwerksgondel (1) verlaufen.

9. Triebwerksgondel nach einem der vorangehenden Ansprüche, **dadurch gekennzeichnet, dass** die luftdurchlässige Struktur (16) derart ausgebildet ist, dass sie eine definierte Ausblasrichtung aufweist, in der Luft von der Innenseite (11) in das Gondelinnere strömen kann.

10. Triebwerksgondel nach einem der vorangehenden Ansprüche, **dadurch gekennzeichnet, dass** die Ausblasrichtung eine Richtungskomponente in Längsrichtung (X) der Triebwerksgondel (1) aufweist, so dass durch die luftdurchlässige Struktur (16) strömende Luft mit einer Geschwindigkeitskomponente in Richtung der Hauptströmung in das Gondelinnere (19) strömt.

11. Triebwerksgondel nach einem der vorangehenden Ansprüche, soweit rückbezogen auf Anspruch 2, **dadurch gekennzeichnet, dass** die Röhren (161) an ihren der Innenseite (11) zugewandten Enden in Längsrichtung (X) der Triebwerksgondel (1) gebogen sind.

12. Triebwerksgondel nach einem der vorangehenden Ansprüche, **dadurch gekennzeichnet, dass** die luftdurchlässige Struktur (16) an der Außenseite (13) mindestens eine Materialschicht (162) aufweist, die durch ein poröses Material mit definierter Durchlassrichtung gebildet ist.

13. Triebwerksgondel nach Anspruch 12, soweit rückbezogen auf Anspruch 2, **dadurch gekennzeichnet, dass** angrenzend an die an der Außenseite (13) ausgebildete Materialschicht (162) aus porösem Material die Vielzahl von Röhren (161) ausgebildet ist, wobei diese sich von der Materialschicht (162) aus porösem Material bis zur Innenseite (11) erstrecken.

14. Triebwerksgondel nach einem der vorangehenden Ansprüche, **dadurch gekennzeichnet, dass** die luftdurchlässige Struktur (16) in einem axialen Abstand, der das 2-5fache des Gondellippen-Durchmesser beträgt, stromabwärts der Einlauflippe (14) ausgebildet ist.

15. Triebwerksgondel nach einem der vorangehenden Ansprüche, **dadurch gekennzeichnet, dass** die luftdurchlässige Struktur (16) zumindest in einem Umfangsbereich an der Triebwerksgondel (1) ausgebildet ist, der sich bei einer an einer Tragfläche montierten Triebwerksgondel (1) seitlich befindet.
